# EUROPEAN PATENT SPECIFICATION

(11) **EP 4 238 758 B1**
(45) Date of publication and mention of the grant of the patent: **18.12.2024**
(21) Application number: 23159928.3
(22) Date of filing: 03.03.2023
(51) Int. Cl.: B29C 70/88, B29C 70/54, B32B 5/12, B32B 5/26, B32B 15/14, B32B 15/08

(54) **REINFORCEMENT THERMOPLASTIC-BASED FIBRE-METAL LAMINATE COMPOSITE FRAME AND MANUFACTURING METHOD THEREOF**
VERBUNDSTOFFRAHMEN AUS VERSTÄRKUNGSTHERMOPLASTBASIERTEM FASER-METALL-LAMINAT UND HERSTELLUNGSVERFAHREN DAFÜR
CADRE COMPOSITE DE STRATIFIÉ DE FIBRES-MÉTAL À BASE DE THERMOPLASTIQUE DE RENFORCEMENT ET SON PROCÉDÉ DE FABRICATION

(30) Priority: 04.03.2022 PT 2022117835
(43) Date of publication of application: 06.09.2023
(73) Proprietor: INEGI - Instituto de Ciência e Inovação em Engenharia Mecânica e Engenharia Industrial, 4200-465 Porto (PT)
(72) Inventor: KAUL, ROBIN, 4200-346 PORTO (PT); PEREIRA, RÚBEN LEANDRO LEITÃO, 3620-303 MOIMENTA DA BEIRA (PT); GOMES, RUI PEDRO MOURÃO, 4485-529 MINDELO (PT); CORREIA, NUNO ANDRÉ CURADO MATEUS, 3810-085 AVEIRO (PT); RIBEIRO DA SILVA, FERNANDO DANIEL, 4635-723 VILA BOA DE QUIRES (PT)
(74) Representative: Monteiro Alves, Inês

(56) References cited:
- EP-A1- 1 801 427
- WO-A1-96/31667
- CN-A- 110 228 251
- US-A1- 2020 018 260

## Description

### Technical field

This application relates to a reinforcement composite frame for any lightweight application component, preferably for automotive and aerospace components, and to the manufacturing process of said composite reinforcement frame.

### Background art

The pursuit of lightweight structures has driven the advancements and commercial use of composite materials. The high strength-to-weight ratio of composite materials is highly dependent upon the layup direction of the fibres, and quickly starts to lose this characteristic as the fibres deviate from load direction to include more of a transisotropic behaviour (all-around strength).

Among the first proponent of fibre-metal hybrid materials and their use as aerospace grade material was TU Delft where Schijve et al. (EP-A-0056289) described a composite laminate consisting multiple layers of metal sheets and fibre layers bonded together via an adhesive. The metal sheets are made from aluminum alloys and proposed to have a thickness of .25 to 1.00 mm and the fibre/adhesive layer is sandwiched between the metal sheets. The laminate structure was proposed to be a suitable material for aircraft skin.

However, in certain examples (like heavily loaded joints), the all-around (in all direction) increase in strength by adding multiple plies bulks up the structure and increase the weight of component thus defeating the purpose of using composite materials for "high strength to weight ratio" gains. EP-1801428 claims to provide a solution for this problem by proposing the use of metal reinforcements in the heavily joint areas, particularly mechanically fastened joints as a virgin CFRP composite is susceptible to delamination around the fastening holes. The metal reinforcements (layers) are inserted while laying up the multiple plies of a composite panel (or beam) such that the fibres of the panel area (non-joint area) are continuous throughout the joint area, thereby meaning that increase in the joint area thickness is same as the thickness of said reinforcements.

For large-scale production and cost-effectiveness, it is necessary to have low cycle times during production. US-4390489 laid down the basic concept for the fast manufacture of multi-material layered structure. It proposed the forming of a metal/reinforced thermoplastic layup through a rapid-stamping process where the metal layer act as clamping support and provides structural integrity during heating, prior to forming into complex 3D shapes. WO 96/31667 discloses a frame of fibre reinforced thermoplastic material with metal plate like fittings.

Current art and general methodology include the addition of composite layers in the critical load-path of a component. General practice is to include multiple layers of fibre/polymer composite in a single direction (UD) or in varying directions to improve planar strength in all directions. To reduce the weight, each layer can be custom cut via laser to add holes or perforations of desired shape. However, this layup philosophy of building each layer as a closed surface geometry leaves some discontinuous fibres in each layer that are not contributing to overall strength and stiffness of the material but rather contributes to bulk mass.

### Summary

The present invention relates to a reinforcement composite frame (22) comprising:
at least one-layer set, wherein each layer set comprises:
a first layer comprising at least one first prepreg strip (11) having one first orientation;
a second layer comprising at least one second prepreg strip (12) having a second orientation arranged at an angle between 0° and 180° to each of the first prepreg strips (11), wherein each of the second prepreg strips (12) is fixed to each of the first prepreg strips (11) in at least one intersection area (A); and
a third layer comprising a metal sheet (13) at each intersection (A);
wherein each prepreg strip (11, 12) comprises unidirectional thermoplastic fibre.

In one embodiment each metal sheet (13) is either on top of each second prepreg strip (12) at each intersection area (A) or between each first (11) and second (12) prepreg strips at each intersection area (A).

In one embodiment each of the second prepreg strips (12) intersects each of the first prepreg strips (11), making an angle of 0° and 180° between them, preferably an angle of 90°.

In one embodiment the composite further comprises a discontinuous prepreg layer (14) laid subsequently to each extremity of each metal sheet (13).

The present invention also relates to a process for producing the reinforcement composite frame (22) comprising the steps of:
- lay up of a reinforcement frame (22) comprising at least one layer set as described above, wherein the process for producing a layer set comprises:
   laying a first layer in one orientation, wherein the first layer comprises at least one first prepreg strip (11);
   laying a second layer on top of the first layer, wherein the second layer comprises at least one second prepreg strip (12) arranged at an angle between 0 and 180° to the orientation of the at least one first prepreg strip (11), wherein at least one second prepreg strip (12) of the second layer adheres to the top of each prepreg strip (11) of the first layer in at least one intersection (A); and
   laying a third layer comprising a metal sheet (13) on each intersection (A);
   wherein each prepreg strip (11, 12) comprises unidirectional thermoplastic fibres.

In one embodiment each metal sheet (13) is positioned in a different orientation than each metal sheet (13) of the subsequent layer set, forming a staggered positioning of the metal sheets (13).

In one embodiment each metal sheet (13) is 5 to 15% different in size than each metal sheet (13) of the subsequent layer set, forming a staggered position.

In one embodiment each metal sheet (13) is either placed on top of each second prepreg strip (12) at each intersection area (A) or between each first (11) and second (12) prepreg strips at each intersection area (A).

In one embodiment each of the second prepreg strips (12) intersects each of the first prepreg strips (11), making an angle of 0° and 180° between them, preferably an angle of 90°.

In one embodiment a discontinuous prepreg layer (14) is laid subsequently to each extremity of each metal sheet (13), depending on the disparity between the prepreg and metal sheet (13) thickness.

In one embodiment, on top of the frame (22) is over-molded a bulk-part (23) made of lightweight formable material selected from thermoplastic sheets or short fibre composite mats, or fabricated via injection moulding using thermoplastic pellets, originating a reinforced part (24).

### Detailed Description

The present patent application provides a thermoplastic-based fibre-metal laminate reinforcement composite frame which is an optimal compositional solution for building a lightweight structure. The present patent application also provides the manufacturing process of said reinforcement frame.

For a high production volume application, on top of the frame (22) is over-molded a bulk-part (23) made of lightweight formable material selected from thermoplastic sheets or short fibre composite mats, or fabricated via injection moulding using thermoplastic pellets, originating a reinforced part (24). The reinforcement frame is proposed to be made of single direction (UD) fibre composite. The layup of reinforcement frame (22)) is at the centre of this invention. Furthermore, an addition of metal layers at the intersection areas is proposed to benefit the attachment hole behaviour. The invention also proposes method of placement of metal layers.

In one main embodiment of the present patent application, it is disclosed herein a reinforcement composite frame that comprises multiple layers of unidirectional thermoplastic prepreg, wherein each prepreg layer is placed on top of each other and arranged in an intersecting pattern so that each layer has an orientation arranged at angle between 0 and 180°, preferably 90° to the subsequent layer, thus forming a mesh-like structure or frame, wherein a smaller metal layer / metal sheet is placed after each intersection of prepreg layers in order reinforce those areas that are more prone to suffer multidirectional tensions. In one preferable embodiment, the reinforcement frame disclosed herein is a mesh-like structure. The prepreg layers comprise any fibre suitable for composite construction, for example glass, carbon or aramid fibres. The metal layers comprise at least one of aluminum alloy, steel and magnesium alloy, preferably thin sheets (0.05 to 2.00 mm) of aluminum alloy.

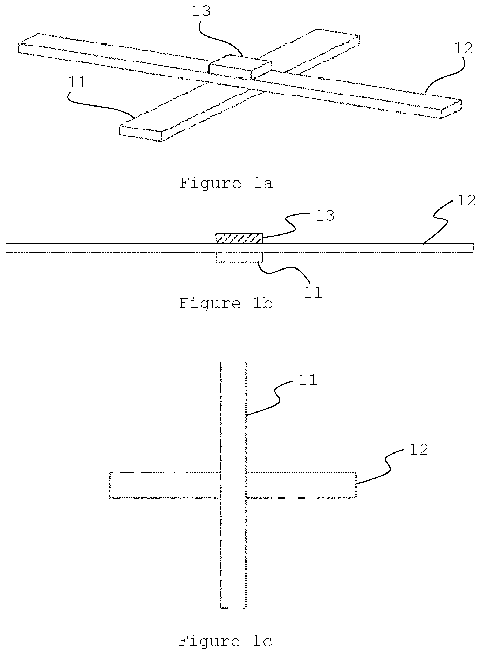

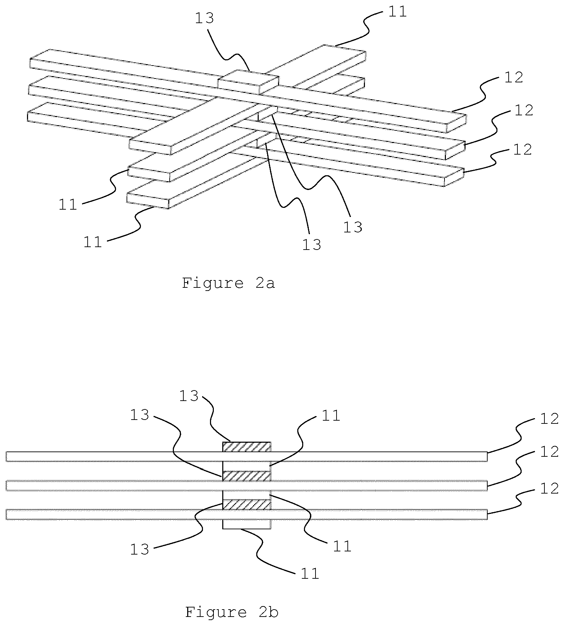

The present invention proposes the layers comprised of the reinforcement composite frame to be arranged in a modular fashion, where each unidirectional prepreg strip runs along the entire length or width of the part to be reinforced and creates areas of intersection, thereby creating an intertwined mesh form. Making reference to figure 1 that discloses the simplest embodiment of the present invention, i.e. a layer module, and figure 2 that discloses a reinforcement frame that comprises multiple layer modules, it is disclosed herein a reinforcement frame (22) comprising at least one layer module of unidirectional composite layers arranged in an alternate succession of at least one first prepreg composite strip (11) having one first orientation and at least one second prepreg composite strips (12) having a second orientation arranged at angle between 0 and 180°, preferably 90°, to the first prepreg strips (11) intersecting and contacting each other on at least one intersection area (A), and at least one metal sheet (13) placed on the at least one intersection area (A), either between each first prepreg strip(11) and respective subsequent each second prepreg strip (12) or on top of each intersection between each first prepreg strip (11) and each second prepreg strip (12). According to the present application, and for the sake of clarity, the invention disclosed herein refers to "layer module" or "layer set" which can be used interchangeably and are better defined as a set of 3 layers where one first layer comprises at least one of first prepreg strip (11) having a first orientation (and parallel to each other in case of at least two first prepreg strips (11)), a second layer comprising at least one of second prepreg strips (12) having an orientation arranged at angle between 0 and 180° to the first orientation, wherein each of the second prepreg strips (12) is fixed to each of the first prepreg strips (11) in at least one intersection area (A), a third layer comprising a metal sheet (13) at each intersection area (A) either between each first (11) and second (12) prepreg strips or on top of said first (11) and second (12) prepreg strips, wherein a reinforced frame (22) may comprise as many layer modules as necessary.

In one embodiment, and when making reference to a 2D plane, prepreg strips having a first orientation (11) could be understood as substantially horizontal strips and prepreg strips having a second orientation (12) could be understood as substantially vertical strips (fig. 1c).

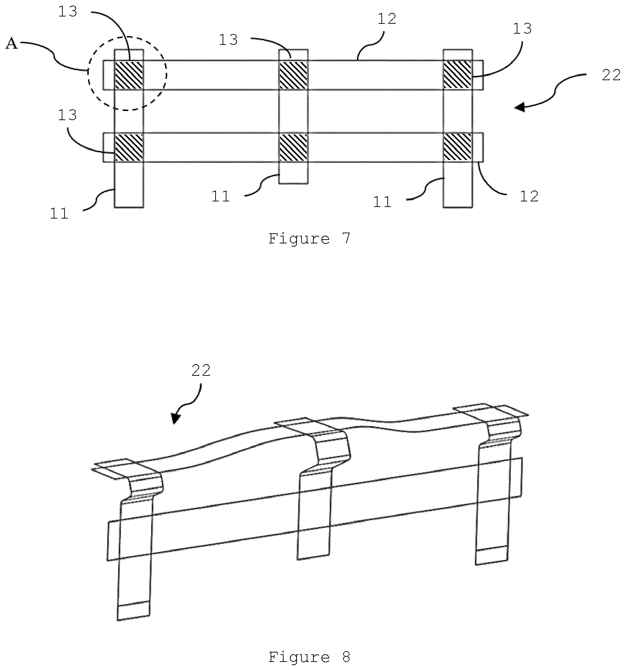

Although a hand layup on a flat (2D plane) surface could be performed in the context of the present invention, a preferred embodiment (figure 7) consists of using automated tape (prepreg strip) lay-up method where the layup is prepared such that two tape-laying heads place first (horizontal) prepreg strips (12) followed by three tape-laying heads placing second (vertical) strips (11), followed by placing metal sheet (13) at each intersection area (A), and these three steps repeated until desired thickness of composite strips is achieved. Again, it is important to emphasize that the terms vertically and horizontally serve to give a positional reference in relation to 2D plane where the layers are being laid up.

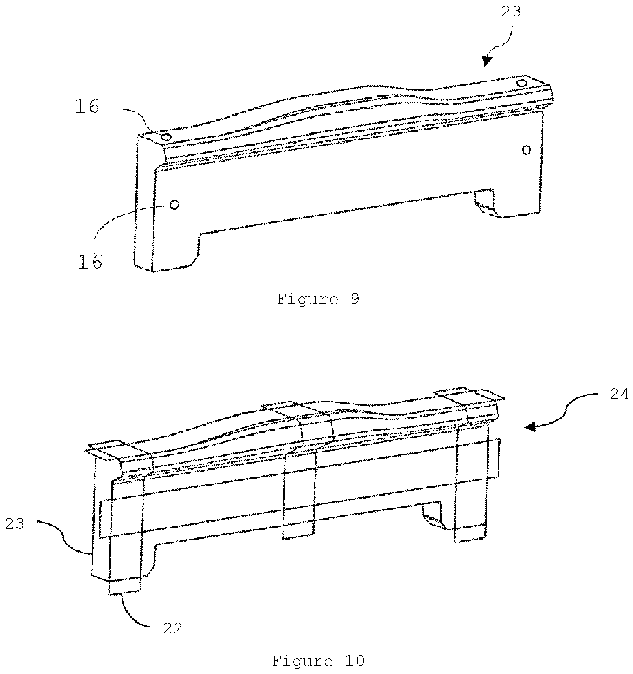

Figure 10 shows other examples, where a bulk part (23) is supported by a reinforcement frame (22) made of unidirectional composite strips (11, 12) in a mesh form as well as metal sheets (13) to reinforce the intersection areas (A). The alternate layers in intersection areas bonds firmly during co-forming and a molded reinforcement frame (22) behaves as a cohesive structure instead of a group of thick strips.

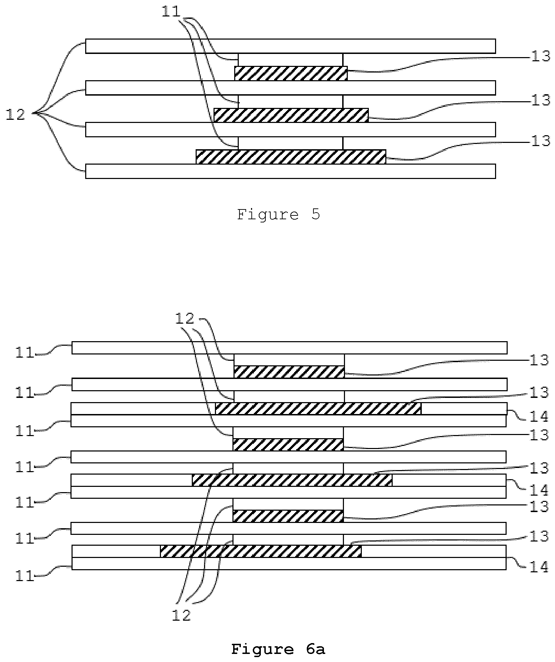

In another main embodiment of the present patent application, it is provided herein a process for producing said reinforcement frame (22) which includes addition of metal layers. The placement of metal layer during layup is of prime importance. In one example, according to figure 5, the reinforcement frame (22), comprises three-layer modules (and one additional layer of first prepreg strips (11)), i.e. a total of 4 layers of first prepreg strips (11) and 3 layers of second prepreg strips (12) with metal sheets (13) at each intersection area (A). All the first prepreg strips (11) run across the length while the second prepreg strips (12) have dimension equal or more than full width of final component (24) and run across it. The layup also comprises one metal sheet (13) at each intersection (A) per layer module. In this example, the metal sheets (13) are placed on top of each of the second prepreg strips (12). After placing another set of first prepreg strips (11) and another set of second prepreg strips (12), the next set of metal sheets (13) placed is 5 to 15% (preferably 10%) smaller in size compared to metal sheets (13) of the previous layer module. This size difference allows for staggered position when centered across the intersection area. Similarly, a third metal sheet (13) layer is placed after another set of first (11) and second (12) prepreg strips. From a top-bottom perspective, the top metal sheets (13) are smaller in size compared to both metal layer beneath it and allows for all metal layers to be placed in staggered fashion.

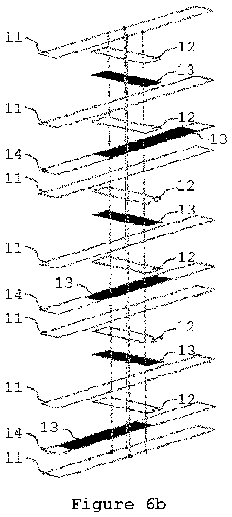

In one embodiment better illustrated by Figures 6a and 6b every third layer constitutes both metal and prepreg layer. First prepreg strip (11) of the first layer module is laid, followed by metal sheets (13) at the intersection area. Two discontinuous prepreg strips (14) are placed adjacent to metal sheet (13), which is followed by a second prepreg strip (12). This set of 3 layers is repeated over the bottom set (subsequent layer module). In the subsequent layer module, the metal sheet is placed in an orientation that is orthogonal to metal sheet of the previous layer module. These two-layer modules are then repeated wherein the respective metal layers are placed at a slight staggered position in relation to the metal layers of the previous layer modules. The two staggered position are within 5-15% of length of metal sheets. This layup of a set of 6 layers is repeated 2 more times, each time orienting the metal layer perpendicular to the direction of preceding metal layer. Optionally, a prepreg strip (11) is laid at the top of the laminate.

### Brief description of drawings

For easier understanding of this application, figures are attached in the annex that represent the preferred forms of implementation which nevertheless are not intended to limit the technique disclosed herein.

Figure 1a shows a layer module, where the layer of first prepreg strip (11) is laid and then the layer of second prepreg strip (12) is laid on top of the layer of first prepreg strip (11), such that both layers are perpendicular to each other.

The layer module consists of a third layer of metal sheet (13) placed at each intersection area of the two prepreg strip layers (11,12).
Figure 1b shows the layer module from front view.
Figure 1c shows the layer module from bottom, with metal sheet (13) hidden behind the 2 prepreg layers (11,12).
Figures 2a and 2b show the stacking of multiple layer modules on top of one another to form a thicker composite structure.

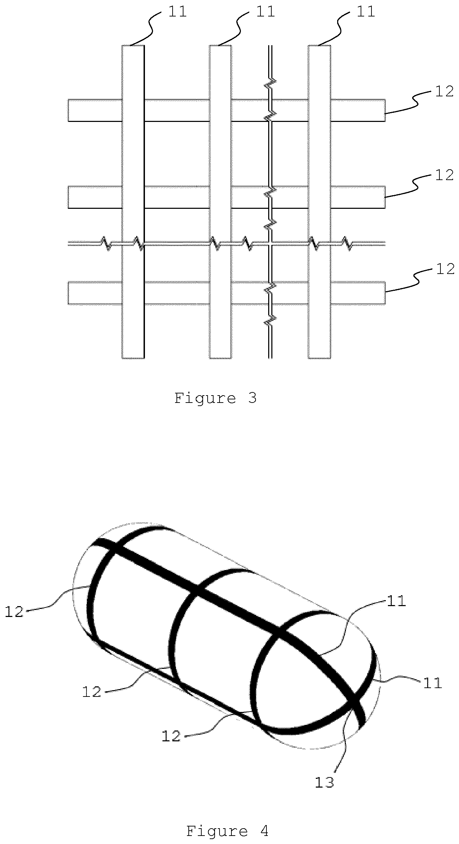

Figure 3 shows one-layer module that comprises one layer of multiple first prepreg strips (11) and one layer of multiple second prepreg strips (12), producing a large mesh like structure.
Figure 4 show one embodiment of the proposed invention, where the reinforcement frame (22) is in a cylindrical form ending in hemi-spherical shape.
Figure 5 shows another embodiment of the application at one intersection area over multiple layer modules stacked on top of each other.
Figure 6a shows another embodiment of same application where each layer module further comprises discontinuous prepreg strips (14) laid as a continuation of each metal sheet (13).
Figure 6b shows, in a tridimensional perspective, the same embodiment of Figure 6a.
Figure 7 shows an unmolded (flat) reinforcement frame (22).
Figure 8 shows the composite reinforcement frame (22) as molded in the shape of a bulk part, achieved after a forming process.
Figure 9 shows the schematic view of a bulk part (23) that needs reinforcement. It also shows attachment holes (16) where the reinforcement frame (22)'s intersection areas (A) will be.
Figure 10 shows the bulk part (23) and reinforcement frame (22) together, as intended according to the presently disclosed invention.

### Description of the embodiments

Now, preferred embodiments of the present application will be described in detail with reference to the annexed drawings. However, they are not intended to limit the scope of this application.

The present patent application describes a reinforcement composite frame (22) comprising:
at least one-layer set, wherein each layer set comprises:
a first layer comprising at least one first prepreg strip (11) having one first orientation;
a second layer comprising at least one second prepreg strip (12) having a second orientation arranged at an angle between 0 and 180° to each of the first prepreg strips (11), wherein each of the second prepreg strips (12) is fixed to each of the first prepreg strips (11) in at least one intersection area (A); and
a third layer comprising a metal sheet (13) at each intersection (A);
wherein each prepreg strip (11, 12) comprises unidirectional thermoplastic fibre.

In one embodiment, each metal sheet (13) is either on top of each second prepreg strip (12) at each intersection area (A) or between each first (11) and second (12) prepreg strips at each intersection area (A).

In one embodiment, each of the second prepreg strips (12) intersects each of the first prepreg strips (11), making an angle of 0° and 180° between them, preferably an angle of 90°.

The present patent application also describes the process for producing the reinforcement composite frame as defined above, wherein the process comprises:
- lay up of a reinforcement frame (22) comprising at least one layer set as described above, wherein the process for producing a layer set comprises:
   laying a first layer in one orientation, wherein the first layer comprises at least one first prepreg strip (11);
   laying a second layer on top of the first layer, wherein the second layer comprises at least one second prepreg strip (12) arranged at an angle between 0 and 180° to the orientation of the at least one first prepreg strip (11), wherein at least one second prepreg strip (12) of the second layer adheres to the top of each prepreg strip (11) of the first layer in at least one intersection (A); and
   laying a third layer comprising a metal sheet (13) on each intersection (A);
   wherein each prepreg strip (11, 12) comprises unidirectional thermoplastic fibres.

In one embodiment, each metal sheet (13) is positioned in a different orientation than each metal sheet (13) of the subsequent layer set, forming a staggered positioning of the metal sheets (13).

In one other embodiment, each metal sheet (13) is 5 to 15% different in size than each metal sheet (13) of the subsequent layer set, forming a staggered position.

In one embodiment, each metal sheet (13) is either placed on top of each second prepreg strip (12) at each intersection area (A) or between each first (11) and second (12) prepreg strips at each intersection area (A).

In one embodiment, each of the second prepreg strips (12) intersects each of the first prepreg strips (11), making an angle of 0° and 180° between them, preferably an angle of 90°.

In one embodiment, a discontinuous prepreg layer (14) is laid subsequently to each extremity of each metal layer, depending on the disparity between the prepreg and metal sheet (13) thickness.

This description is of course not in any way restricted to the forms of implementation presented herein and any person with an average knowledge of the area can provide many possibilities for modification thereof without departing from the general idea as defined by the claims. The preferred forms of implementation described above can obviously be combined with each other. The following claims further define the preferred forms of implementation.

## Claims

1. A reinforcement composite frame (22) **characterized in that** it comprises:
at least one-layer set, wherein each layer set comprises:
a first layer comprising at least one first prepreg strip (11) having one first orientation;
a second layer comprising at least one second prepreg strip (12) having a second orientation arranged at an angle between 0° and 180° to each of the first prepreg strips (11), wherein each of the second prepreg strips (12) is fixed to each of the first prepreg strips (11) in at least one intersection area (A); and
a third layer comprising a metal sheet (13) at each intersection (A);
wherein each prepreg strip (11, 12) comprises unidirectional thermoplastic fibre.

2. The reinforcement composite frame (22) according to the previous claim, wherein each metal sheet (13) is either on top of each second prepreg strip (12) at each intersection area (A) or between each first (11) and second (12) prepreg strips at each intersection area (A).

3. The reinforcement composite frame (22) according to any of claims 1-2, wherein each of the second prepreg strips (12) intersects each of the first prepreg strips (11), making an angle of 0° and 180° between them, preferably an angle of 90°.

4. The reinforcement composite frame (22) according to any of claims 1-3, further comprising a discontinuous prepreg layer (14) laid subsequently to each extremity of each metal sheet (13).

5. Process for producing the reinforcement composite frame (22) as defined in any one of the previous claims, **characterized in that** the process comprises the steps of:
- lay up of a reinforcement frame (22) comprising at least one layer set as defined in any one of the previous claims, wherein the process for producing a layer set comprises:
laying a first layer in one orientation, wherein the first layer comprises at least one first prepreg strip (11);
laying a second layer on top of the first layer, wherein the second layer comprises at least one second prepreg strip (12) arranged at an angle between 0 and 180° to the orientation of the at least one first prepreg strip (11), wherein at least one second prepreg strip (12) of the second layer adheres to the top of each prepreg strip (11) of the first layer in at least one intersection (A); and
laying a third layer comprising a metal sheet (13) on each intersection (A).

6. The process according to claim 5, wherein each metal sheet (13) is positioned in a different orientation than each metal sheet (13) of the subsequent layer set, forming a staggered positioning of the metal sheets (13).

7. The process according to any of claims 5-6, wherein each metal sheet (13) is 5 to 15% different in size than each metal sheet (13) of the subsequent layer set, forming a staggered position.

8. The process according to any of claims 5-7, wherein each metal sheet (13) is either placed on top of each second prepreg strip (12) at each intersection area (A) or between each first (11) and second (12) prepreg strips at each intersection area (A).

9. The process according to any of claims 5-8, wherein the angle of 0° up to 180° at the intersection between each second prepreg strip (12) and each first prepreg strip (11) is preferably an angle of 90°.

10. The process according to any of claims 5-9, wherein a discontinuous prepreg layer (14) is laid subsequently to each extremity of each metal sheet (13), depending on the disparity between the prepreg and metal sheet (13) thickness.

11. A reinforced part (24) comprising a bulk-part (23) made of lightweight formable material selected from thermoplastic sheets or short fiber composite mats, or fabricated via injection molding using thermoplastic pellets, **characterized in that** said bulk-part (23) is over-molded on top of a reinforcement frame as defined in any one of the claims 1 to 4.

## Patentansprüche

1. Ein Verstärkungs-Verbundrahmen (22), **dadurch gekennzeichnet, dass** er Folgendes umfasst:
Mindestens einen Schichtensatz, worin jeder Schichtensatz aus Folgendem besteht:
Einer ersten Schicht, die mindestens einen ersten Prepreg-Streifen (11) mit einer ersten Orientierung aufweist,
einer zweiten Schicht, die mindestens einen zweiten Prepreg-Streifen (12) mit einer zweiten Orientierung aufweist, der in einem Winkel zwischen 0° und 180° zu jedem der ersten Prepreg-Streifen (11) angeordnet ist, wobei jeder der zweiten Prepreg-Streifen (12) an jedem der ersten Prepreg-Streifen (11) in mindestens einem Kreuzungsbereich (A) fixiert ist, und einer dritten Schicht, die aus einem Metallblech (13) an jeder Kreuzung (A) besteht,
worin jeder Prepreg-Streifen (11, 12) unidirektionale thermoplastische Fasern enthält.

2. Der Verstärkungs-Verbundrahmen (22) gemäß dem vorhergehenden Anspruch, worin jedes Metallblech (13) entweder oberhalb jedes zweiten Prepreg-Streifens (12) an jedem Kreuzungsbereich (A) oder zwischen jedem ersten (11) und zweiten (12) Prepreg-Streifen an jedem Kreuzungsbereich (A) angeordnet ist.

3. Der Verstärkungs-Verbundrahmen (22) gemäß einem der Ansprüche 1 - 2, worin jeder der zweiten Prepreg-Streifen (12) jeden der ersten Prepreg-Streifen (11) schneidet und einen Winkel von 0° und 180° zwischen beiden, vorzugsweise einen Winkel von 90º bildet.

4. Der Verstärkungs-Verbundrahmen (22) gemäß einem der Ansprüche 1 - 3, der ferner eine diskontinuierliche Prepreg-Schicht (14) aufweist, die anschließend an jedem Ende jedes Metallblechs (13) angebracht wird.

5. Verfahren zur Herstellung des Verstärkungs-Verbundrahmens (22) gemäß einem der vorhergehenden Ansprüche, **dadurch gekennzeichnet, dass** das Verfahren folgende Schritte umfasst:
- Auflegen eines Verstärkungsrahmens (22), der aus mindestens einem Schichtensatz gemäß einem der vorhergehenden Ansprüche besteht, worin das Verfahren zur Herstellung eines Schichtensatzes Folgendes umfasst:
Aufbringen einer ersten Schicht in einer Orientierung, worin die erste Schicht mindestens einen ersten Prepreg-Streifen (11) aufweist,
Aufbringen einer zweiten Schicht auf die erste Schicht, wobei die zweite Schicht mindestens einen zweiten Prepreg-Streifen (12) umfasst, der in einem Winkel zwischen 0 und 180º zur Ausrichtung des mindestens einen ersten Prepreg-Streifens (11) angeordnet ist, wobei mindestens ein zweiter Prepreg-Streifen (12) der zweiten Schicht an der Oberseite jedes Prepreg-Streifens (11) der ersten Schicht in mindestens einem Schnittpunkt (A) haftet, und
Aufbringen einer dritten Schicht, bestehend aus einem Metallblech (13) an jedem Schnittpunkt (A).

6. Das Verfahren gemäß Anspruch 5, worin jedes Metallblech (13) in einer anderen Orientierung als jedes Metallblech (13) des nachfolgenden Schichtensatzes angeordnet ist, wodurch eine versetzte Positionierung der Metallbleche (13) gebildet wird.

7. Das Verfahren gemäß einem der Ansprüche 5-6, worin jedes Metallblech (13) eine 5 bis 15 % unterschiedliche Größe zu jedem Metallblech (13) des nachfolgenden Schichtensatzes aufweist, wodurch eine versetzte Positionierung gebildet wird.

8. Das Verfahren gemäß einem der Ansprüche 5 bis 7, worin jedes Metallblech (13) entweder auf jedem zweiten Prepreg-Streifen (12) an jedem Kreuzungsbereich (A) oder zwischen jedem ersten (11) und zweiten (12) Prepreg-Streifen an jedem Kreuzungsbereich (A) platziert wird.

9. Das Verfahren gemäß einem der Ansprüche 5-8, worin der Winkel von 0° bis 180° am Schnittpunkt zwischen jedem zweiten Prepreg-Streifen (12) und jedem ersten Prepreg-Streifen (11) vorzugsweise ein Winkel von 90° ist.

10. Das Verfahren gemäß einem der Ansprüche 5 bis 9, worin eine diskontinuierliche Prepreg-Schicht (14) nachträglich auf jedes Ende jedes Metallblechs (13) gelegt wird, in Abhängigkeit von der Diskrepanz zwischen der Dicke des Prepregs und des Metallblechs (13).

11. Ein verstärktes Teil (24), bestehend aus einem Massenteil (23), das aus leichtem, formbarem Material unter Verwendung von thermoplastischen Platten oder kurzen Faserverbundmatten, oder durch Spritzgießen unter Verwendung von thermoplastischen Pellets hergestellt wird, **dadurch gekennzeichnet, dass** das genannte Massenteil (23) auf einen Verstärkungsrahmen gemäß einem der Ansprüche 1 bis 4 aufgebracht wird.

## Revendications

1. Un cadre composite de renforcement (22) **caractérisé en ce qu'**il comprend :
au moins un ensemble de couches, dans lequel chaque ensemble de couches comprend :
une première couche comprenant au moins une première bande de préimprégné (11) ayant une première orientation ;
une deuxième couche comprenant au moins une deuxième bande de préimprégné (12) ayant une deuxième orientation agencée à un angle compris entre 0° et 180º par rapport à chacune des premières bandes de préimprégné (11), dans lequel chacune des deuxièmes bandes de préimprégné (12) est fixée à chacune des premières bandes de préimprégné (11) dans au moins une zone d'intersection (A) ; et
une troisième couche comprenant une feuille métallique (13) à chaque intersection (A) ;
dans lequel chaque bande de préimprégné (11, 12) comprend de la fibre thermoplastique unidirectionnelle.

2. Le cadre composite de renforcement (22) selon la revendication précédente, dans lequel chaque feuille métallique (13) est soit au sommet de chaque seconde bande de préimprégné (12) au niveau de chaque zone d'intersection (A), soit entre chaque première (11) et seconde (12) bandes de préimprégné au niveau de chaque zone d'intersection (A).

3. Le cadre composite de renforcement (22) selon l'une quelconque des revendications 1 à 2, dans lequel chacune des secondes bandes de préimprégné (12) croise chacune des premières bandes de préimprégné (11), formant entre elles un angle de 0° et 180°, de préférence un angle de 90º.

4. Le cadre composite de renforcement (22) selon l'une quelconque des revendications 1 à 3, comprenant en outre une couche de préimprégné discontinue (14) déposée ultérieurement à chaque extrémité de chaque feuille métallique (13).

5. Procédé de fabrication du cadre composite de renforcement (22) tel que défini selon l'une quelconque des revendications précédentes, **caractérisé en ce que** le procédé comprend les étapes consistant à :
- mettre en place un cadre de renforcement (22) comprenant au moins un ensemble de couches tel que défini selon l'une quelconque des revendications précédentes, dans lequel le procédé de fabrication d'un ensemble de couches comprend :
la pose d'une première couche dans une orientation, dans laquelle la première couche comprend au moins une première bande de préimprégné (11) ;
la pose d'une deuxième couche au sommet de la première couche, dans laquelle la deuxième couche comprend au moins une seconde bande de préimprégné (12) agencée à un angle compris entre 0 et 180º par rapport à l'orientation de l'au moins une première bande de préimprégné (11), dans laquelle au moins une seconde bande de préimprégné (12) de la deuxième couche adhère au sommet de chaque bande de préimprégné (11) de la première couche dans au moins une intersection (A) ; et
la pose d'une troisième couche comprenant une feuille métallique (13) sur chaque intersection (A).

6. Le procédé selon la revendication 5, dans lequel chaque feuille métallique (13) est positionnée dans une orientation différente de chaque feuille métallique (13) de l'ensemble de couches suivant, formant un positionnement décalé des feuilles métalliques (13).

7. Le procédé selon l'une quelconque des revendications 5 à 6, dans lequel chaque feuille métallique (13) a une taille différente de 5 à 15 % de celle de chaque feuille métallique (13) de l'ensemble de couches suivant, formant une position décalée.

8. Le procédé selon l'une quelconque des revendications 5 à 7, dans lequel chaque feuille métallique (13) est placée soit au sommet de chaque seconde bande de préimprégné (12) au niveau de chaque zone d'intersection (A), soit entre chaque première (11) et seconde (12) bande de préimprégné au niveau de chaque zone d'intersection (A).

9. Le procédé selon l'une quelconque des revendications 5 à 8, dans lequel l'angle de 0° à 180° à l'intersection entre chaque seconde bande de préimprégné (12) et chaque première bande de préimprégné (11) est de préférence un angle de 90°.

10. Le procédé selon l'une quelconque des revendications 5 à 9, dans lequel une couche de préimprégné discontinue (14) est déposée ultérieurement à chaque extrémité de chaque feuille métallique (13), en fonction de la disparité entre l'épaisseur du préimprégné et celle de la feuille métallique (13).

11. Une pièce renforcée (24) comprenant une pièce massive (23) constituée d'un matériau léger façonnable sélectionné parmi des feuilles thermoplastiques ou des mats composites à fibres courtes, ou fabriquée par le biais de moulage par injection à l'aide de pastilles thermoplastiques, **caractérisée en ce que** ladite pièce massive (23) est surmoulée sur le sommet d'un cadre de renforcement tel que défini selon l'une quelconque des revendications 1 à 4.
